# EUROPEAN PATENT APPLICATION

(11) **EP 0 781 504 A1**
(43) Date of publication of application: **02.07.1997**
(21) Application number: 96610050.5
(22) Date of filing: 23.12.1996
(51) Int. Cl.: A01C 7/08, A01C 15/00

(54) **A combination of a seed hopper and a blower and a drill comprising such a combination**

(30) Priority: 28.12.1995 DK 1482/95
(71) Applicant: KONGSKILDE MASKINFABRIK A/S, DK-4180 Soro (DK)
(72) Inventor: Jespersen, Hans Borggard, 4180 Soro (DK)
(74) Representative: Raffnsoee, Knud Rosenstand

(57) **Abstract**

The combination comprises a seed hopper (1) for containing a granulated material (17) for sowing and a blower (2) for establishing pneumatic transport of material (17) from the hopper (1) to a drilling device, and means are provided for pneumatic filling of the hopper (1) with granulated material (17), the intake of the blower (2) being connected with an intake duct (4) with a branch (9) opening into the hopper (1), and a valve (5) for connecting and disconnecting the branch (9), whereby the blower (2) sucks from the interior and exterior, respectively, of the hopper (1), the hopper (1) having an airtight closure and being provided with an opening (15) with a coupling for connection with a pipe (16) outside the hopper.

## Description

The present invention relates to a combination of a seed hopper for containing a granulated material for sowing and a blower for establishing pneumatic transport of material from the hopper to a drilling device, in which means are provided for pneumatic filling of the hopper with granulated material. The invention further relates to a drill comprising such a combination.

Such a combination and a drill is known from US-A-4 842 449 which discloses a drill with an ejector which is supplied with air by the blower of the drill. The ejector is provided with a suction pipe and a blow pipe. The suction pipe is put down into a storage hopper and the blow pipe into the seed hopper of the drill to fill it and vice verse to empty it. It is, however, most labour-demanding to adjust the drill from sowing to filling/emptying by means of the ejector, because a pipe guiding air from a manifold connected with the blower to a dosage port has to be dismounted first from the dosage port and connected with the ejector, while other pipes from the manifold are being barred. Another drawback of this prior art is that such an ejector conveyor will have a very small capacity relative to the size of an ordinary seed container, for which reason it would take an unacceptably long time for a drill to fill the seed container.

The object of the invention is to avoid the drawbacks of this prior art.

This object is met by a combination of the type mentioned by way of introduction, which combination according to the invention is characteristic in that the intake of the blower is connected with an intake duct with a branch opening into the hopper, and a valve for connecting and disconnecting the branch, whereby the blower sucks from the interior and exterior, respectively, of the hopper, that the hopper has an airtight closure and that it is provided with an opening with a coupling for connection with a pipe outside the hopper. Hereby is obtained that the switch from sowing to filling is carried through by just readjusting the valve.

Said branch is preferably at its opening provided with a perforated cover. Hereby granulated material in the tank is prevented from being sucked into the blower.

In a preferred embodiment the blower is built into the hopper. Hereby a unit is obtained which comparatively easily may be used in connection with known sowing aggregates without necessarily having to be built into them. The unit may for instance be arranged at the front of a tractor, while a sowing aggregate is mounted at the back of the tractor, and the blower establishes pneumatic transport of material from the hopper to the sowing aggregate.

The invention will be described in detail in the following by means of an example of an embodiment with reference to the schematic drawing, in which
Fig. 1 shows a transparent hopper combined with a blower according to the invention during sowing, and
Fig. 2 the same combination as in Fig. 1, but during filling of the hopper.

The figures show a hopper 1 which is depicted as transparent. Built into the hopper 1 is a blower 2, the pressure branch socket 3 of which extends outside the hopper. The intake of the blower 2 is connected with an intake duct 4, which extends within the hopper 1 and is connected with a valve 5 comprising a valve flap 6 which is hinged about an axis 8 and by means of a handle 7 outside the hopper 1 is brought to alternatively bar one of two branches 9, 10.

The branch 9 is connected with a compartment 11 which is separated from the rest of the interior of the hopper 1 by a wall 12 of perforated plate.

The second branch 10 is through a duct 13 in the hopper 1 connected with slits 14 in the wall of the hopper, and therethrough with the surroundings.

Moreover, an opening 15 is provided in the wall of the hopper 1, to which a hose 16 may be connected.

During sowing the blower is used for establishing in a manner known per se pneumatic transport of granulated material 17 in the hopper to not shown seed coulters. The granulated material 17 in the hopper 1 is removed in a manner known per se through the bottom of the hopper and is dosed by means of known aggregates.

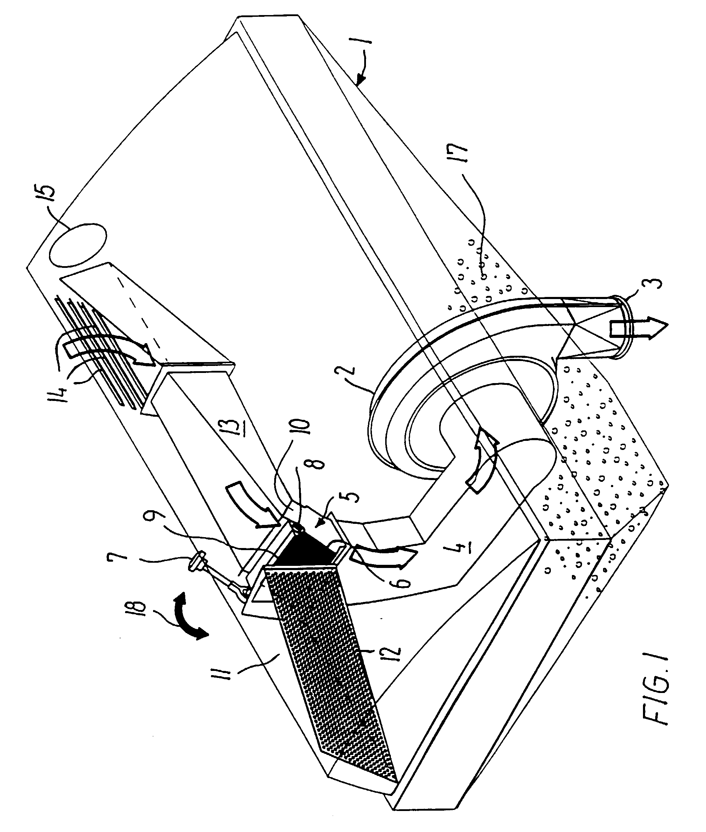

During sowing the handle 7 which may be moved as indicated by the double-arrow 18 is swung to the position shown in Fig. 1, whereby the flap 6 is brought to bar the branch 9 and to open the connection from the surroundings through the slits 14, the duct 13, the branch 10 and the intake duct 4 to the blower 2. The opening 15 may in this case be closed by a cover not shown, which, however, preferably does not close airtight such that pressure equalization during sowing may take placed through the opening 15.

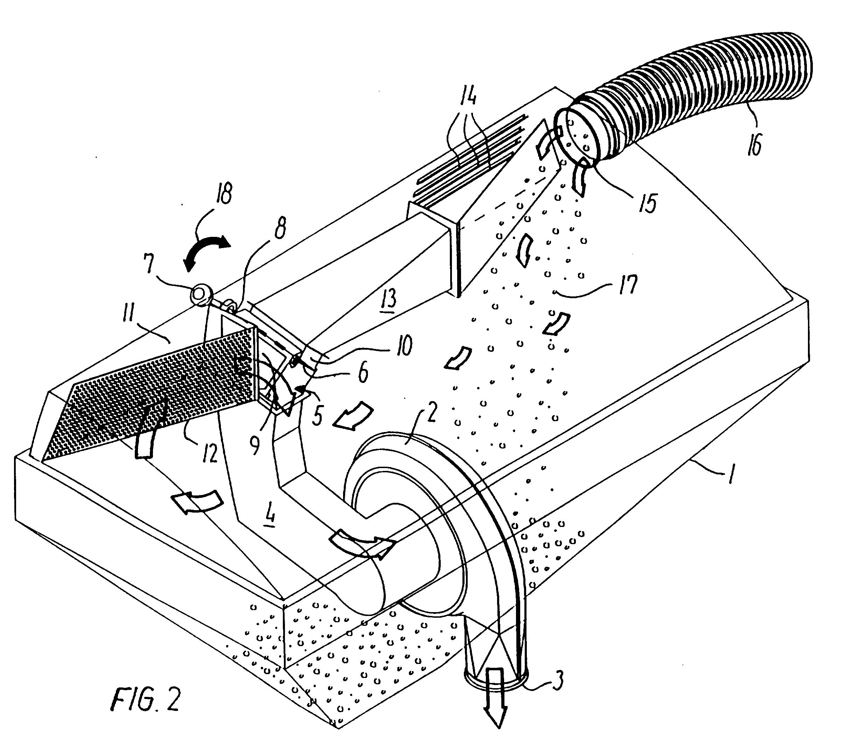

During filling of the hopper 1, the handle 7 is swung to the position shown in Fig. 2, whereby the branch 10 is barred and access is given from the interior of the hopper 1 through the perforated plate 12, the compartment 11, the branch 9 and the intake duct 4 to the blower. The blower thereby sucks from the interior of the hopper 1, and as the hopper, apart from the opening 15, is substantially airtight, a low pressure is established which makes it possible for granulated material 17 to be sucked into the hopper 1 through the hose 16 which has now been connected with the opening 15.

The path of the air to the blower is in both cases indicated by arrows.

## Claims

1. A combination of a seed hopper (1) for containing a granulated material (17) for sowing and a blower (2) for establishing pneumatic transport of material (17) from the hopper (1) to a drilling device, in which means are provided for pneumatic filling of the hopper (1) with granulated material (17), **characterized** in that the intake of the blower (2) is connected with an intake duct (4) with a branch (9) opening into the hopper (1), and a valve (5) for connecting and disconnecting the branch (9), whereby the blower (2) sucks from the interior and exterior, respectively, of the hopper (1), that the hopper (1) has an airtight closure and that it is provided with an opening (15) with a coupling for connection with a pipe (16) outside the hopper.

2. A combination according to claim 1, **characterized** in that said opening (15) during filling constitutes a substantially sole connection from the surroundings to the interior of the hopper, and in that means are provided which during sowing connect the interior of the hopper with the surroundings.

3. A combination according to claims 1 or 2, **characterized** in that said branch (9) at its opening is provided with a perforated cover (12).

4. A combination according to claim 1, 2 or 3, **characterized** in that the blower (2) is built into the hopper (1).

5. A drill comprising a combination according to claims 1-4.
